**Europäisches Patentamt**

**European Patent Office**

**Office européen des brevets**

(19)

(11) Publication number: **0 457 628 A2**

(12) # EUROPEAN PATENT APPLICATION

(21) Application number: **91400716.6**

(22) Date of filing: **18.03.91**

(51) Int. Cl.$^5$: **G01V 5/10**

(30) Priority: **22.03.90 US 497376**

(43) Date of publication of application:
**21.11.91 Bulletin 91/47**

(84) Designated Contracting States:
**DE FR GB IT NL**

(71) Applicant: **SCHLUMBERGER LIMITED**
**277 Park Avenue**
**New York, N.Y. 10172 (US)**
**GB**
Applicant: **SERVICES PETROLIERS**
**SCHLUMBERGER**
**42, rue Saint-Dominique**
**F-75007 Paris (FR)**
**FR**
Applicant: **SCHLUMBERGER TECHNOLOGY**
**B.V.**
**Carnegielaan 12**
**NL-2517 KM Den Haag (NL)**
**DE IT**
Applicant: **SCHLUMBERGER HOLDINGS**
**LIMITED**
**P.O. Box 71, Craigmuir Chambers**
**Road Town, Tortola (VG)**
**NL**

(72) Inventor: **Carroll, James**
**110 Riverview Rd.**
**Lafayette, Louisiana 70503 (US)**

(74) Representative: **Hagel, Francis et al**
**ETUDES ET PRODUCTIONS SCHLUMBERGER**
**Service Brevets B.P. 202**
**F-92142 Clamart Cédex (FR)**

(54) **Nuclear activation method and apparatus for detecting and quantifying earth elements.**

(57)    A nuclear apparatus for obtaining qualitative and quantitative information related to an element of earth formation surrounding a borehole, comprising :
   (1) a neutron source for irradiating the formation with neutrons of sufficient energy to activate atoms of at least a given element ; (2) at least two (preferably four) detectors longitudinally spaced from said source, for detecting the gamma rays emitted during the activation reaction ; (3) means for assigning a maximum number of counts for each detector and for establishing a relationship between these maximum number of counts and the corresponding instant of time counts for each detector ; and (4) means for deriving from the relationship qualitative information related to the element.
   The relationship is approximately a straight line, the slope of which is representative of the element of interest. The amplitude of the counts is representative of the quantity of the activated element and of the radial distance between the activated atoms and the borehole.

EP 0 457 628 A2

FIG.1

# NUCLEAR ACTIVATION METHOD AND APPARATUS FOR DETECTING AND QUANTIFYING EARTH ELEMENTS

## BACKGROUND OF THE INVENTION

### 1. Field of the invention

This invention relates generally to the detection and quantification of certain earth formation elements surrounding a borehole, and especially elements sensitive to the nuclear activation reaction.

### 2. Description of the related art

The detection and determination of certain elements present in an earth formation or in the well itself is of great importance in the oil production business, since the presence and amount of these elements provide useful information. Among the logging techniques used for such determination are the nuclear logging techniques, and particularly the nuclear activation method wherein a sonde comprising a high energy neutron source and a gamma ray detector is lowered in the well to investigate. Certain atoms interact with neutrons in being activated to an unstable state which decays back exponentially in time to a stable state, while emitting gamma rays of given energy representative of the activated atom. Count rates in the gamma ray detector are proportional to the total amount of the element of interest present around the sonde. By way of example, oxygen, silicon, aluminum, magnesium, or gold atoms may be activated.

Oxygen atoms are representative of water. For example, a well which has been determined to be promising for oil production, is provided with a metallic casing, and cement is injected between the earth formation and the casing. Perforations are then made through the casing/cement and in the oil productive formation, so as to allow oil to flow up to the surface through a tubing beforehand arranged in the well coaxially to the casing. Unwanted vertical flow of water can occur in the cement, between the casing and the formation. This phenomenon, usually called "water channeling", causes undesirable paths between formations located at different depths, i.e. at different pressures, e.g. by allowing water from a first formation layer to mix with oil coming from a second formation layer. This phenomenon disturbs substantially the oil production. It is of great importance to identify fluid points of entrance to or exit from the borehole, as well as to determine the mechanical integrity of the cement annulus.

The invention may also be used, besides the water flow detection hereabove referred to, to qualify gravel packing which is usually disposed in the annulus between the productive formation and the screened tubing, for preventing sand invasion in the tubing. As a matter of fact, aluminum and silicon are found in abundance in gravel-pack material. Aluminum e.g. is found in sintered bauxite and silicon in standard gravel pack. The use of the activation method for the detection of aluminum has been depicted in the article "The Aluminum Activation Log" from H.D. Scott and M.P. Smith, in The Log Analyst, September-October 1973, pages 3-12.

Magnesium is another element of interest which is sensitive to the activation reaction. Magnesium is indicative of the presence of shales.

· Moreover, gold atoms, when bombarded with high energy neutrons, become activated. In some instances, gold is injected as a tracer in oil wells and therefore follows the fluid paths in the formation. Thus, presence of gold is representative of fractures in the formations.

Accordingly, there is a need for a better knowledge relating to the above mentioned elements in the earth formation.

However, the known methods and apparatus, although satisfactory, show limitations.

First, they do not offer a straightforward and simple way to distinguish the different activated elements one from the other. As a matter of fact, the gamma rays received by the detector may come from different types of activated atoms.

Furthermore, the known methods do not generally provide any quick and reliable information about the radial distance between the activated elements and the borehole.

According to the above, there is a need for a reliable method for obtaining quantitative and qualitative information related to given earth formation elements able to be activated by neutrons.

## SUMMARY OF THE INVENTION

An object of the invention is a logging method and apparatus providing reliable quantitative and qualitative information on elements able to be activated present in earth formation surrounding a borehole.

Another object of the invention is to identify the activated element (s).

A further object of the invention is to provide information on the radial distance between the activated atoms of the element of interest and the borehole.

An even further object of the invention is to provide a straightforward and simple method providing easily interpretable results to the user.

The foregoing and other objects are attained in accordance with the invention by a nuclear logging method for obtaining qualitative and quantitative information related to elements in earth formation surrounding a borehole, comprising the steps of:

(1) irradiating the formation with neutrons from a neutron source, the neutrons being of sufficient energy to interact with at least one element according to the activation reaction;

(2) detecting and counting, at at least two locations spaced from the source, the gamma rays emitted during the activation reaction of the element;

(3) determining the maximum number of counts and the corresponding instant of time for each detecting location, and establishing a relationship between the instant times and the counts for all of the detecting locations; and

(4) deriving from the relationship qualitative information related to the element.

More particularly, the relationship is expressed in the form of a plot of counts versus time; the plot is approximately a straight line the slope of which is representative of the element of interest.

Moreover, the maximum number of counts (or amplitude) is representative of the quantity of the activated element and of the radial distance between the activated element and the borehole.

In a preferred embodiment, the method includes moving in the borehole an elongated sonde comprising four detectors longitudinally spaced from the neutron source.

Particularly, the method includes moving the sonde in the borehole, while detecting and counting, at a linear speed such that the influence of elements other than the element of interest is minimized.

The present invention also contemplates a nuclear apparatus for obtaining qualitative and quantitative information related to an element of earth formation surrounding a borehole, comprising:

(1) neutron source means for irradiating the earth formation with neutrons of sufficient energy to interact with atoms of at least a given element according to the activation reaction;

(2) means for detecting and counting at at least two locations spaced from the source, the gamma rays emitted during the activation reaction;

(3) means for determining the maximum number of counts and the corresponding instant times for each detecting location and means for establishing a relationship between the instant times and the maximum number of counts for all of the detecting locations; and

(4) means for deriving from the relationship qualitative information related to the element.

The characteristics and advantages of the invention will appear better from the description to follow, given by way of a nonlimiting example, with reference to the appended drawing in which:

## BRIEF DESCRIPTION OF THE DRAWINGS

FIG. 1 shows an example of a logging tool according to the invention, provided with four detectors placed below the neutron source;

FIG. 2 shows theoretical plots of counts versus time, of the counts detected respectively by the four detectors, for different kinds of activated elements; and

FIG. 3 shows two plots similar to those of FIG. 2, corresponding to the activation of silicon atoms at two different radial locations from the tool;

FIG. 4 shows an alternative embodiment of the tool; and

FIG. 5 is a plot showing the relationship between the number of counts and the logging speed for a one detector tool.

## DESCRIPTION OF THE PREFERRED EMBODIMENTS

The invention will be hereafter depicted in connection with the logging techniques, and especially with the detection and quantification of given elements of earth formation surrounding a borehole.

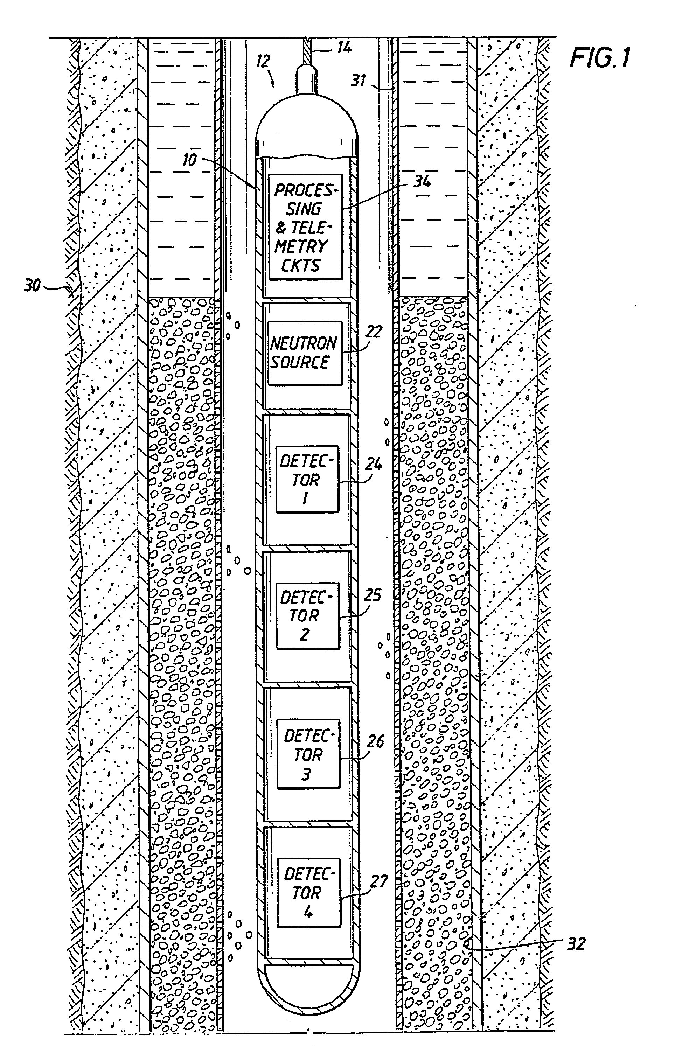

An example of an embodiment of the invention is described and illustrated in FIG. 1 showing a nuclear logging tool or sonde 10 suspended by an armored cable 14 in a borehole 12 surrounded by earth formations 30, and comprising a tubing 31 and a casing 32.

The downhole tool 10 includes a neutron source in the form of a pulsed neutron generator 22 and four gamma ray detectors 24, 25, 26 and 27 that are located at different distances (or spacings) from the neutron generator 22. The gamma ray detectors 24-27 are aligned along the longitudinal axis of the sonde 10, on the same side with respect to the neutron generator 22. For the illustration of the present invention, the neutron generator 22 is of the type which generates discrete pulses of fast neutrons, e.g. 14 Mev, and may for example be of the type described in more complete detail in U.S. Pat. No. 2,991,364 to C. Goodman, and U.S. Pat. No. 3,546,512 to A.H. Frentrop. The generator emits 14 Mev neutrons having an energy level above the threshold energy level needed for the oxygen activation. Operation of the neutron generator 22 is controlled as usual by a neutron generator control circuit (not shown) which may also be of the type described in the aforementioned patents. The detectors 24, 25, 26 and 27 may be of any construction suitable for the detection of gamma rays, such as thallium-activated sodium iodide scintillation detectors or bismuth germanate crystal detectors. In this respect, the detectors will be understood to include the usual photomultiplier tubes, photomultiplier high voltage supplies, and amplifier-discriminators (not shown). It will also be understood that other downhole power sources (not shown) are provided as required to drive the neutron generator 22 and other downhole circuits. Power for the logging tool 10 is supplied over the cable 14 from a surface power supply (not shown), as is conventional.

Output pulses from the gamma ray detectors are applied to processing and telemetry circuits 34 which count and store the signals from the gamma ray detectors, and which include downhole telemetry circuits for transmission to the surface over the cable 14. These circuits are designed to achieve the timing schedules for neutron emission and gamma ray detection according to that discussed in detail below. The downhole telemetry circuits 34 may be of any known construction for encoding, time division multiplexing, or otherwise preparing the data-bearing signals. At the earth's surface, the data-bearing signals from the detectors 24, 25, 26 and 27, respectively, are amplified, decoded, demultiplexed and otherwise processed as needed in surface telemetry circuits (not shown) which may also be conventional. The telemetry circuits also include circuits for the receipt and transmission, respectively, of command messages from the surface.

Following transmission to surface telemetry circuits, the respective signals from each gamma ray detector are separately counted to acquire the counts data over a desired period of time, and then stored. From storage, the count data are processed in a computer which suitably comprises a microprocessor or, alternatively, a general purpose digital computer such as that manufactured by Digital Equipment Corporation, Maynard, Mass., under the designation PDP-11. As is described more fully herebelow, the computer processes the count data from the respective detectors to develop various desired outputs which may be recorded in conventional fashion as a function of tool depth in a recorder. The usual cable-following mechanical linkage is provided for this purpose. More details about the overall design of the above mentioned circuits can be found e.g. in U.S. Pat. No. 4,721,853, which is herein incorporated by reference.

The measurements carried out by the tool 10 are based on the nuclear reaction called "activation", as described e.g. in the article "Advances in Nuclear Production Logging" by P.A Wichmann et al., Trans., SPWLA (1967). A nuclear source emits high energy neutrons which interact with certain atoms in the earth formation in such a way that these atoms are activated to an unstable state which decays back exponentially in time with a given half life, to a stable atom while emitting gamma rays of an energy representative of the activated atom.

After the tool has been lowered in the borehole, either down to the bottom or at a lower level than the zone to investigate, the neutron source is turned on and the tool is pulled out of the borehole while detecting the gamma rays resulting from the activation. The tool is pulled out at a given linear speed (usually called "logging speed") which is typically in the range of a few hundred to three thousand feet/hour. The logging speed is preferably chosen in relation to the element of interest, and more particularly to the half life of the corresponding atom, in order to minimize the influence of other atoms which might also be activated. Accordingly, the longer the atom half life, the slower the logging speed. When carrying out measurements related to oxygen, the logging speed will be faster than the logging speed when investigating for silicon or aluminum, which itself will be faster than for gold measurements. According to the teaching of the article from H. D. Scott and M. P. Smith hereabove referred to, the logging speed providing a maximum number of counts is given by the formula:

$$V = K\, d\, /\, t,$$

where "V" is the logging speed, "K" is a constant determined experimentally (e.g. K = 0.693 ), "d" is the spacing between the detector and the source (in feet) and "t" is the half life time of the element of interest (in hours). For example, assuming the spacing "d" is equal to 5 feet, the respective logging speeds given by the hereabove mentioned formula is:

V = 1750 feet/hour     for oxygen;

V = 100 feet/hour     for silicon and/or aluminum.

However, the optimum logging speed is actually a compromise taking into account opposite requirements. First, technical constraints limit the range of operational speeds to between 500 feet per hour and 3000 feet per hour. Second, business requirements push towards a logging speed as high as possible. Third, the relationship between the number of counts and the logging speed, as shown in FIG. 5 in the form of a plot of counts versus speed, from the article from H.D. Scott and M.P. Smith, is such that small variations around the speed value corresponding to the maximum number of counts leads to a large variation in the number of counts and, therefore, is detrimental to the measurements. The optimum logging speed is chosen in the part of the plot having a light slope, thus providing a reasonable number of counts without jeopardizing the measurements accuracy.

In case the tool has more than one detector, such as the tool of Fig. 1, the optimum logging speed is determined as hereabove mentioned, with "d" being the spacing of the detector closest to the source, or the intermediate detector (e.g. the second from the source, in case of a four detector tool). By way of example, the spacings of the respective detectors of the tool shown on Fig. 1 are respectively: between 5 and 20 inches, 20 and 35 inches, 40 and 50 inches, and 50 and 70 inches.

According to the above, a logging speed of 500 feet per hour constitutes, for aluminum/silicon, a compromise between the above mentioned constraints.

The source remains activated during all the time the measurements are carried out. The irradiation may be provided by either continuous neutrons emission or successive bursts of neutrons.

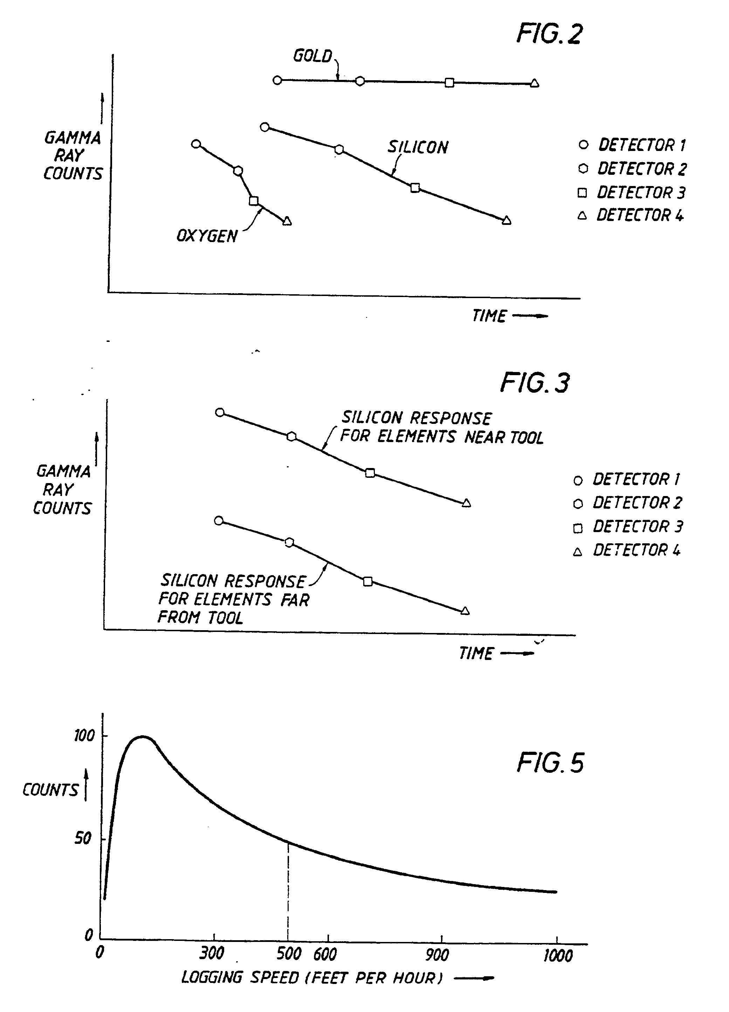

FIG. 2 shows different plots of counts versus time. Each plot includes four successive points connected two by two by a segment line. On a given plot, each point corresponds to the maximum number of counts detected by each gamma ray detector over a given period of time ( e.g. between 10 seconds and 5 minutes). In other words, for a given zone of earth formation which has been irradiated with neutrons and then activated, as each detector comes closer and closer to the activated zone, the number of counts increases up to a maximum reached at an instant in time when the detector is at the closest distance from the activated zone, i.e. when the detector is disposed on the same level or depth as the activated zone.

Each plot forms approximately a straight line the slope of which is characteristic of the corresponding activated atom, and more particularly of its half life. For example, FIG. 2 shows three plots corresponding respectively to oxygen, silicon and gold atoms. While Fig. 2 shows several theoretical examples of plots on the same co-ordinates system, actual measurements would provide a single plot passing through four points corresponding respectively to each detector. By measuring the slope of the line, one could be able to identify the kind of activated atom. This identification could be carried out e.g. by comparing the actual line to a set of reference plots (counts versus time) established through laboratory measurements for each kind of element able to be activated, and thus determine which reference line has a slope closest to the slope of the actual line.

The method and the apparatus according to the invention also provide, besides the qualitative information as hereabove described, quantitative information about the activated atoms. The amplitude or maximum number of counts is a function of the activated level of the atoms, which is a compound function of the logging speed, the neutron source output, the quantity in volume of the area including the activated atoms, as well as the radial distance from the tool of the activated area. Thus, assuming the logging speed and the neutron source output are constant during the measurements, the amplitude of counts which is related to the maximum number of counts for each detector, is representative of the quantity of activated atoms, compounded with the radial distance from the borehole of these atoms. FIG. 3 shows two plots of counts versus time, corresponding to the response to activation of silicon atoms, from two respective areas located at two different radial distances from the borehole. The plot farthest from the time axis corresponds to activation of silicon located near the tool, while the plot closest to the time axis corresponds to activation of silicon atoms located far from the tool, being understood that the words "near" and "far" are here used in their relative meanings. The depth of investigation (in the radial direction) is typically of 3 or 4 feet. The amplitude or maximum number of counts derived from the plots provides a relative indication of the radial distance of the activated atoms within the range of investigation. The actual plots derived from the measurements are, to this end, compared to reference plots established through laboratory measurements.

Thus, through a quick look to the plots, the user is not only able to identify the activated atoms, by determining the slope of the line, but is also able to quantify the amount and distance from the borehole of the activated atoms.

It has to be noted that although the tool hereabove described is provided with four detectors, it only requires basically, at least in theory, two detectors in order to be able to obtain a plot of counts versus time showing two points from which could be inferred a line the slope of which is representative of the activated element.

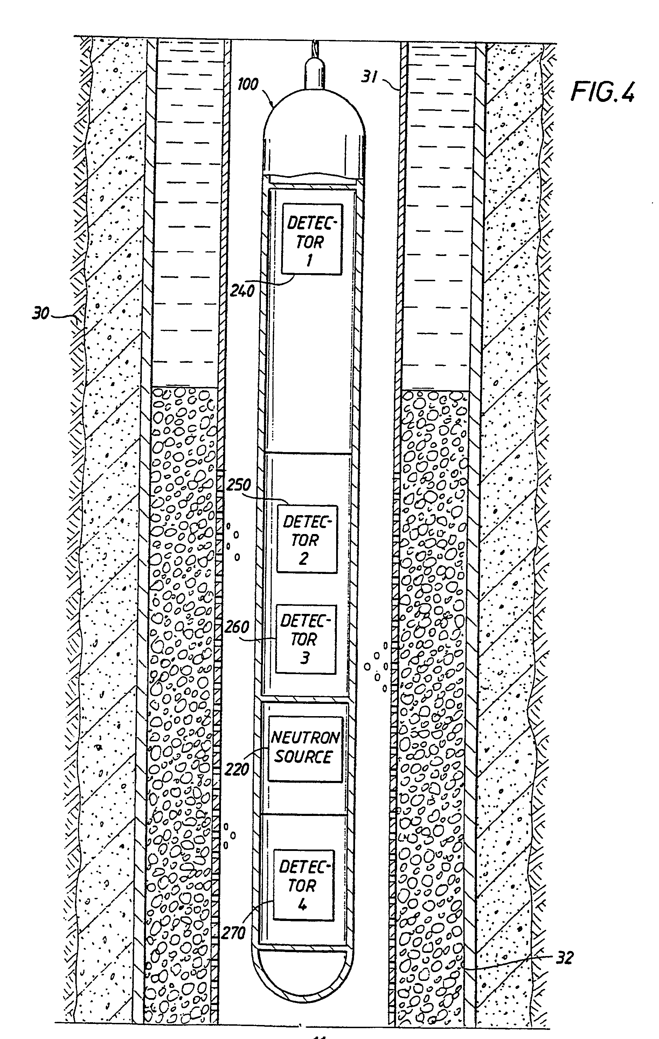

Now there is described an alternative embodiment of the invention, in relation to FIG. 4 showing a logging tool consisting in the combination of several known nuclear logging tools. The tool 100 of FIG. 4 comprises, from top to bottom:

— a first gamma ray detector 240 from a natural gamma ray tool, known as the Gamma Ray (GR) tool, such as described in U. S. patent No. 3,786,267, which is herein incorporated by reference;
— a second and a third gamma ray detector, respectively 250 and 260, and a neutron source 220 similar to the source 22 shown on FIG. 3; these three components are part of a Thermal Decay Tool, or TDT tool, mark of Schlumberger Technology Corporation, such as described in U.S. patent No. 4,721,853; detectors 250 and 260 can be e.g. disposed at the following respective distances from the neutron source 220: between 5 and 20 inches, and 20 and 30 inches;

– a fourth gamma ray detector 270 from a natural gamma ray tool (GR), disposed between 2 and 5 feet from the neutron source 220.

The advantage of the implementation as hereabove described in connection with FIG. 4, resides in the possibility of using and combining existing nuclear logging tools at the cost of slight modifications. The method according to this alternate embodiment comprises the steps of: (i) lowering the tool of Fig. 4 in the borehole, either down to the bottom of the borehole or below the zone to investigate; (ii) turning the neutron source on; (iii) pulling the tool at a logging speed related to the element under investigation; (iv) detecting gamma rays resulting from activation with a single detector; (v) determining the maximum number of counts and the corresponding instant of time, and establishing a relationship between the instant of time and the maximum number of counts; (vi) turning the neutron source off; and (vii) repeating at least one more sequence including the steps (i), (iii), (iv) and (v). In other words, the tool is run in the borehole two times or more, at the same logging speed related to the element of interest, the first run being carried out with the neutron source on, and the remaining runs with the source off. The successive runs are preferably carried out between every second to sixth minute. According to the embodiment of the invention shown in FIG. 4, the measurements are carried out only with detector 270, i.e. the detector placed below the neutron source. For each run, a maximum number of counts is determined as well as the corresponding instant of time. Thus, the different count and time values constitute a plot counts versus time, similar to the plots of FIG. 2 or 3, from which are derived information related to the earth formation element under investigation, in a manner similar to the one hereabove described. The uppermost gamma ray detector 240, disposed e.g. between 20 and 30 feet from the source, may be used for providing a background natural radioactivity level, to be subtracted from the gross measurements.

Although the invention has been described and illustrated with reference to a specific embodiment thereof, it will be understood by those skilled in the art that various modifications and variations of that embodiment may be made without departing from the invention concepts disclosed. Accordingly, all such modifications are intended to be included within the spirit and scope of the appended claims.

## Claims

1. A nuclear method for obtaining qualitative and quantitative information related to elements in an earth formation surrounding a borehole, comprising the steps of:

   (1) irradiating said formation with neutrons from a neutron source, said neutrons being of sufficient energy to interact with at least one element according to the activation reaction;

   (2) detecting and counting, at at least two different locations spaced from said source, the gamma rays emitted during the activation reaction of said element;

   (3) determining the maximum number of counts and the corresponding instant of time for each detecting locations, and establishing a relationship between said instant times and said maximum number of counts for all of said detecting locations; and

   (4) deriving from said relationship qualitative information related to the element.

2. The method according to claim 1, wherein said relationship is a plot of counts versus time, showing approximately the form of a straight line the slope of which is representative of said element of interest.

3. The method according to claim 1 wherein the amplitude of the counts is representative of the quantity of the activated element and of the radial distance between the activated element and said borehole.

4. The method according to claim 1 further including the step of detecting and counting gamma rays at four locations longitudinally spaced from said neutron source.

5. The method according to claim 1 further including the step of moving in said borehole an elongated sonde including said source and said detection locations, while detecting and counting, at a linear speed such that the influence of elements other than the element of interest is minimized.

6. The method according to claim 1 wherein said detecting locations are disposed on the same side along the longitudinal axis of said borehole with respect to said neutron source.

7. A nuclear method for obtaining qualitative and quantitative information related to elements in an earth formation surrounding a borehole, comprising the steps of:

(1) lowering a sonde down to the bottom of said borehole or below the zone of earth formation to investigate;

(2) pulling said sonde at a logging speed related to an element of interest, while irradiating said formation with neutrons from a neutron source, said neutrons being of sufficient energy to interact with at least one element according to the activation reaction;

(3) detecting and counting, at one location spaced from said source, the gamma rays emitted during the activation reaction of said element;

(4) determining the maximum number of counts and the corresponding instant of time;

(5) repeating at least once the sequence including steps 1,3,4, the neutron source being turned off; and

(6) establishing a relationship between said instant times and said maximum numbers of counts, and deriving from said relationship qualitative information related to said element.

8. The method according to claim 7 wherein said sequences are repeated within period comprised between one second and 6 minutes.

9. The method according to claim 1 wherein said activated element comprises aluminum, silicon, magnesium or gold.

10. A nuclear apparatus for obtaining qualitative and quantitative information related to an element of earth formation surrounding a borehole, comprising:

(1) neutrons source means for irradiating said earth formation with neutrons of sufficient energy to interact with atoms of at least a given element according to the activation reaction;

(2) means for detecting and counting at at least two locations longitudinally spaced from said source, the gamma rays emitted during the activation reaction;

(3) means for determining for each detecting location a maximum number of counts and the corresponding instant of time, and means for establishing a relationship between said instant times and said maximum number of counts for each detecting location; and

(4) means for deriving from the relationship qualitative information related to said element.

FIG.1

FIG.2

GAMMA RAY COUNTS

GOLD

SILICON

OXYGEN

TIME ——

○ DETECTOR 1
○ DETECTOR 2
□ DETECTOR 3
△ DETECTOR 4

FIG.3

GAMMA RAY COUNTS

SILICON RESPONSE FOR ELEMENTS NEAR TOOL

SILICON RESPONSE FOR ELEMENTS FAR FROM TOOL

TIME ——

○ DETECTOR 1
○ DETECTOR 2
□ DETECTOR 3
△ DETECTOR 4

FIG.5

COUNTS

100

50

0

0    300    500  600    900    1000

LOGGING SPEED (FEET PER HOUR) ——

10

FIG.4